# EUROPEAN PATENT SPECIFICATION

(11) **EP 0 977 180 B1**
(45) Date of publication and mention of the grant of the patent: **09.02.2005**
(21) Application number: 98830465.5
(22) Date of filing: 30.07.1998
(51) Int. Cl.: G11B 5/55

(54) **Method for assembling an actuator device for a hard disc device, comprising a read/write transducer, a microactuator and a suspension and the actuator device thus obtained**
Verfahren zur Herstellung eines Aktuators für eine Festplattenvorrichtung, mit einem Lese-/Schreibkopf, einem Microaktuator und einer Aufhängung und die so erhaltene Aktuatorvorrichtung
Méthode pour l'assemblage d'un actuateur pour disque dur, comprenant un transducteur pour lire et enregistrer, un microactuateur et une suspension et l'actuateur ainsi obtenu

(43) Date of publication of application: 02.02.2000
(73) Proprietor: STMicroelectronics S.r.l., 20041 Agrate Brianza (Milano) (IT)
(72) Inventor: Sassolini, Simone, 52037 Sansepolcro (IT); Zerbini, Sarah, 43012 Fontanellato (IT); Vigna, Benedetto, 85100 Potenza (IT); Mastromatteo, Ubaldo, 20010 Cornaredo (IT)
(74) Representative: Cerbaro, Elena, Dr.

(56) References cited:
- EP-A- 0 840 291
- US-A- 3 789 378
- US-A- 5 438 469
- US-A- 5 521 778
- US-A- 5 657 188
- IMAMURA T ET AL: "TRANSVERSE MODE ELECTROSTATIC MICROACTUATOR FOR MEMS-BASED HDD SLIDER" PROCEEDINGS OF THE 9TH. ANNUAL INTERNATIONAL WORKSHOP ON MICRO ELEC MECHANICAL SYSTEMS, INVESTIGATION OF MICRO STRUCTURES, SENSORS, ACTUATORS, MACHINES AND SYSTEMS. SAN DIEGO, FEB. 11 - 15, 1996, no. WORKSHOP 9, 11 February 1996, pages 216-221, XP000689278 INSTITUTE OF ELECTRICAL AND ELECTRONICS ENGINEERS

## Description

The present invention relates to a method for assembling an actuator device for a hard disc, comprising a read/write transducer, a microactuator and a suspension and actuator device thus obtained.

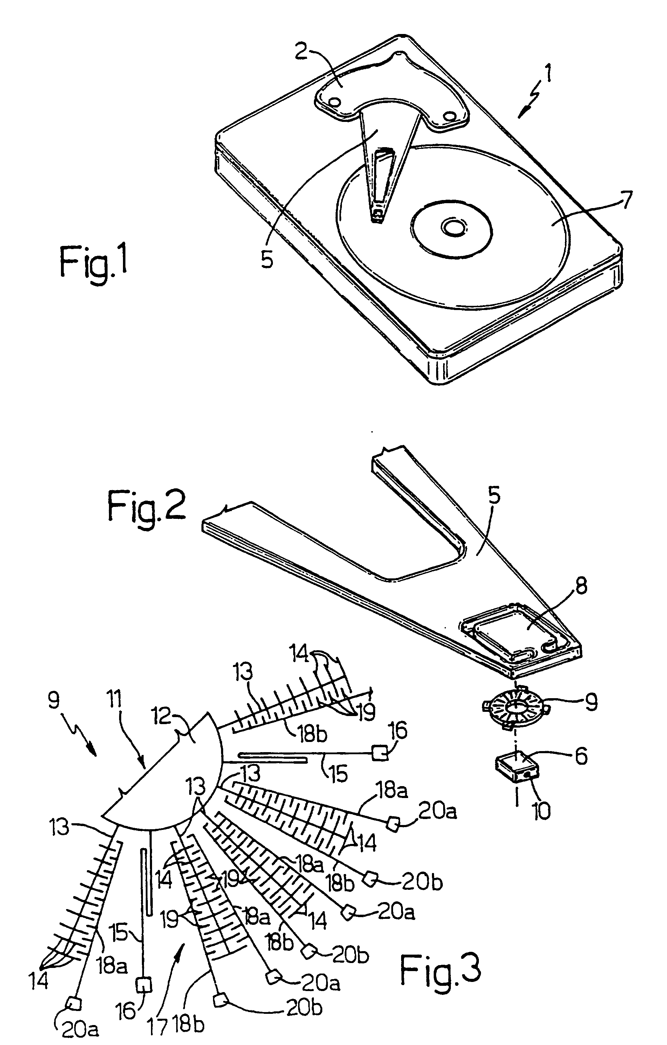

As known, actuator devices for a hard disc have recently been proposed, which are provided with a double actuation stage to finely control the position of the read/write head with respect to a hard disc to be read or written. An example of a known actuator device with a double actuation stage, for a hard disc, is shown schematically in figures 1 and 2. In detail, in figure 1, the actuator device 1 for a hard disc comprises a motor 2 (also called voice coil motor), to which at least one suspension 5 formed by a lamina is fixed in projecting manner. At its free end, suspension 5 supports a read/write (R/W) transducer 6 (figure 2) which is also known as a slider, and, in the operative condition, is disposed facing a surface of a hard disc 7 (figure 1). R/W transducer 6 is rigidly connected to a coupling, called gimbal 8, through a microactuator 9 interposed between the gimbal 8 and the R/W transducer 6 (figure 2). On one of its lateral surfaces the R/W transducer 6, formed by a ceramic material body (e.g. AlTiC), further has a read/write head 10 (magneto/resistive and inductive) which forms the actual read/write device.

In the actuating device 1, the first actuation stage is formed by motor 2 that moves the assembly formed by the suspension 5 and the R/W transducer 6 across the hard disc 7 during track seeking and the second actuation stage is formed by microactuator 9 that finely controls the position of the R/W transducer 6 during tracking.

An embodiment of a microactuator 9 of rotary electrostatic type is shown in diagrammatic form in Fig. 3 in which the microactuator 9 is shown only in part, given its axial symmetry. The microactuator 9 comprises a stator 17, integral with the die accommodating the microactuator 9 and bonded to the gimbal 8, and a rotor 11, intended to be bonded to the R/W transducer 6 (Fig. 2) and capacitively coupled to the stator 17.

Rotor 11 comprises a suspended mass 12 of substantially circular shape and a plurality of movable arms 13 extending radially towards the outside from the suspended mass 12. Each movable arm 13 has a plurality of movable electrodes 14 extending in substantially circumferential direction and at a same distance from each other. The rotor 11 further comprises anchoring and elastic suspension elements (springs 15) for supporting and biasing of the rotor 11 through fixed regions 16.

Stator 17 comprises a plurality of fixed arms 18a, 18b extending radially and each bearing a plurality of fixed electrodes 19; in particular, associated with each movable arm 13 is a pair of fixed arms formed by a fixed arm 18a and a fixed arm 18b; the fixed electrodes 19 of each pair of fixed arms 18a, 18b extend towards the associated movable arm 13 and are intercalated or interleaved with the movable electrodes 14. The fixed arms 18a are all disposed on a same side of the respective movable arms 13 (on the right in the example shown) and are all polarized at the same potential via biasing regions 20a; similarly the fixed arms 18b are all disposed on the other side of the respective movable arms 13 (on the left in the example shown) and are all biased at the same potential through biasing regions 20b.

Fixed arms 18a and 18b are biased at different potentials to generate two different potential differences with respect to the movable arms 13 and cause the rotor to rotate in one direction or the other.

In the assembly of figure 2, there is the problem that microactuator 9 is exposed to the external environment, and is therefore not protected against dielectric particles that can prevent it from functioning satisfactorily. In addition, in the shown actuator device, electrostatic interference may arise between the high voltage used for the actuation (of approximately 80 V) and the read/write head 10, thus preventing, or at least jeopardizing satisfactory functioning of the latter.

US-A-5,657,188 discloses another type of suspension, wherein the write/read head is attached directly to the gimbal and a magnetic motor is provided on the suspension to move the gimbal in a transverse direction.

The object of the invention is thus to provide an actuator device that solves the problems currently affecting known devices.

According to the present invention, a method is provided for assembling an actuator device for a hard disc, comprising a read/write transducer, a microactuator and a suspension, as defined in claim 1 and a microactuator device comprising an R/W transducer, a microactuator and a suspension as defined in claim 13.

To help understanding of the present invention, two preferred embodiments are now described, purely by way of non-limiting example, with reference to the attached drawings, in which:
- figure 1 shows a perspective view of an actuator device of a known type, for hard discs;
- figure 2 is an exploded view of the micrometric actuation unit in the actuator device of figure 1;
- figure 3 is a schematic representation of a rotary-type microactuator;
- figure 4 shows a perspective view of an assembly formed by a microactuator and head according to a first embodiment of the present assembly method, before being glued to a suspension;
- figure 5 is a perspective view of the microactuator/head assembly of figure 4, after being glued to the suspension;
- figure 6 is a cross-section taken along line VI-VI of figure 5;
- figure 6a shows a different embodiment of a detail of figure 6;
- figure 7 is a perspective view of an assembly formed by a microactuator, a head and a suspension, according to a second embodiment of the present method, after being glued; and
- figure 8 is a cross-section taken along line VIII-VIII of figure 7.

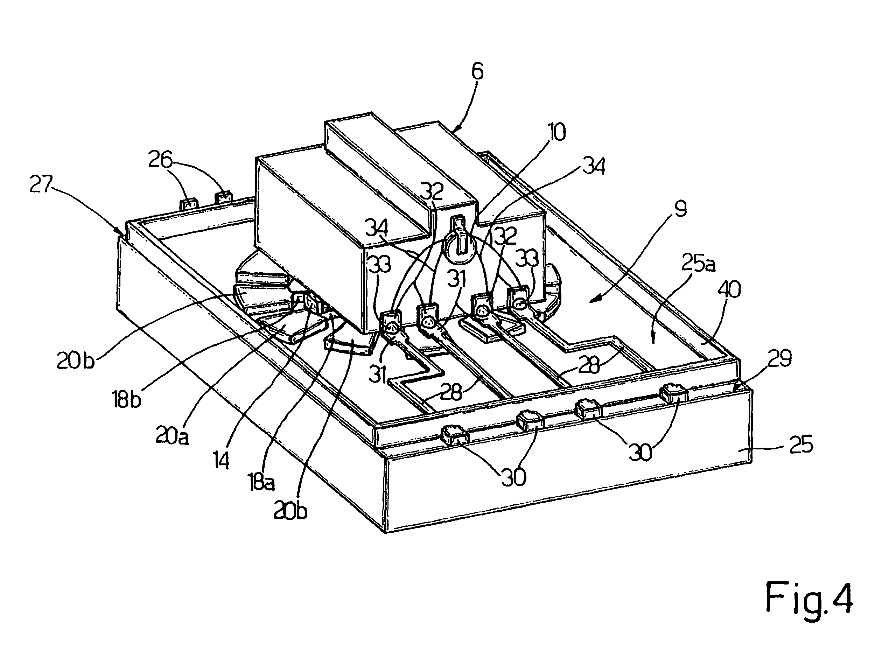

Figure 4 shows an assembly comprising a microactuator 9 and a R/W transducer 6, before being glued to the gimbal 8, according to a first embodiment of the present assembly method. In the following description, the parts common to figures 1-3 are indicated with the same reference numbers.

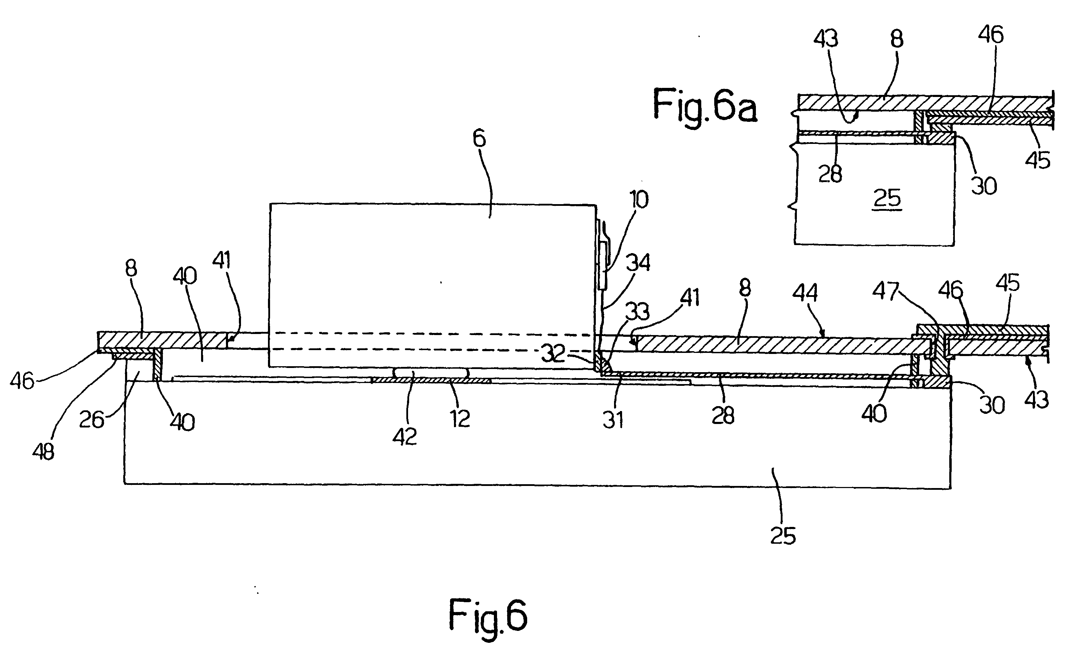

Figure 4 shows a die 25, which accommodates microactuator 9, rotor 11 whereof is already connected to R/W transducer 6; as known, at this stage, R/W transducer 6 does not completely cover the microactuator 9, but considerable parts of the latter remain exposed. Microactuator 9 is manufactured in known manner, as schematised in figure 3 and previously described; in particular, figure 4 shows some biasing regions 20a and 20b, part of the respective fixed arms 18a and 18b, and a movable electrode 14 arranged at the end of a movable arm 13 (not shown). R/W transducer 6 is fixed to the suspended mass 12 of rotor 11, in the manner described hereinafter with reference to figure 6; the die 25 has an upper surface 25a of rectangular shape, facing the microactuator 9, and on which electrical connection and securing structures are formed for the gimbal 8. In detail, first contact pads 26 are formed near a first short side 27 of the upper surface 25a, for connecting electrically components accommodated in the die 25 (including the microactuator 9), to an external control unit (not shown), as explained in detail hereinafter. In addition, electrical connection regions 28 extend between the R/W transducer 6 and a second short side 29, opposite to the first short side 27 of upper surface 25a.

Electrical connection regions 28 are suspended, in order not to prevent rotation of R/W transducer 6 during actuation, and are produced at the end of the manufacturing steps of microactuator 9, for example by depositing metal material on a sacrificial layer, defining the metal material, and then removing the sacrificial layer, as described in detail in EP-A-0955 629. in the name of the same applicant. Alternatively, electrical connection regions 28 can be grown galvanically, using sacrificial regions that also act as a shaping mask.

On the second short side 29, electrical connection regions 28 form second contact pads 30 for connection to the external control unit (not shown), as explained in detail hereinafter; at the R/W transducer 6, the electrical connection regions 28 form connection portions 31 joined to third contact pads 32, formed on the R/W transducer 6 by ball bonding, using balls 33 of conductive material, for example gold, gold alloys or tinned lead. The third contact pads 32 are connected to the head 10 by connection elements 34.

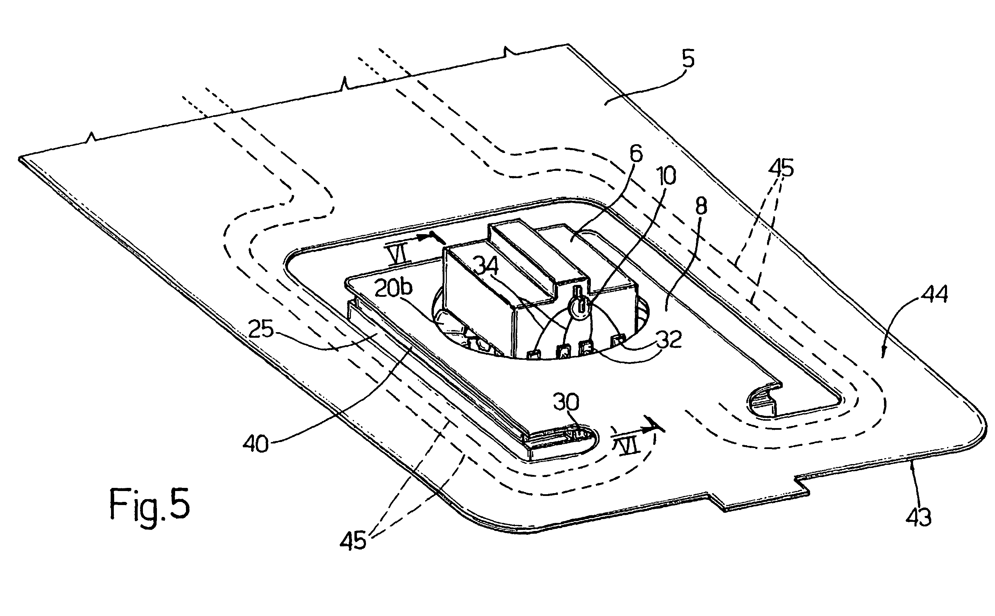

A strip 40 of adhesive material extends near the sides of the surface 25a of die 25, for gluing to the gimbal 8, as shown in detail in figures 5 and 6.

Figures 5 and 6 show the assembly comprising gimbal 8, R/W transducer 6 and die 25, in the final, assembled condition. As can be seen, gimbal 8 (forming a suspension lamina) has a first face 43 looking forward the die 25, and a second face 44, opposite to the first, from which R/W transducer 6 projects. The gimbal 8 is provided with a central circular hole 41, of sufficient dimensions to allow passage of R/W transducer 6, already glued to the rotor 11, as can be seen in particular in the cross-section of figure 6. Figure 6 also shows the adhesive material mass, indicated at 42, arranged between suspended mass 12 and R/W transducer 6. The strip 40 now adheres to the first face 43 of the gimbal 8, thus die 25 and R/W transducer 6, glued to it, are rigidly connected. Both mass 42 and strip 40 can be formed of polymer material curable by ultraviolet rays or by application of heat.

Gimbal 8 and suspension 5 have, on both their faces, conductive tracks for electrical connection to the external control unit (not shown); in particular, on the face 44 of the gimbal 8 and of the suspension 5, conductive tracks 45 are provided (shown only schematically by broken line in figure 5), which are insulated with respect to the gimbal 8 and to the suspension 5, by an insulating material layer 46 (figure 6); the conductive tracks 45 are connected electrically to the second contact pads 30 via holes 47 formed in the gimbal 8. On the other hand the first contact pads 26 (and the components formed in the die 25) are connected to the external control unit (not shown) by conductive tracks 48 (only a portion whereof can be seen in figure 6), which extend on face 43 of gimbal 8 and suspension 5, and are also insulated with respect to the gimbal 8 and the suspension 5 by insulating layer 46.

Die 25 and R/W transducer 6 are assembled to the gimbal 8 as follows, according to figures 4-6. Initially, after forming microactuator 9 in, or on, a semiconductor material wafer, electrical connection regions 28 and first and second contact pads 26, 30 are formed, for example as above described; R/W transducer 6 is glued to the suspended mass 12 (after the mass 42 has been deposited and cured); the semiconductor material wafer is then cut into individual dices 25. Subsequently, the connection portions 31 are electrically connected to the third contact pads 32 by balls 33, thus obtaining the assembly of figure 4. The strip 40 is then formed; the assembly including die 25 and R/W transducer 6 is arranged in contact with the gimbal 8 (which is already provided with the conductive tracks 45, 48) and the strip 40 is activated (cured) by UV or by heat. In this step, first and second contact pads 26, 30 are also soldered to the respective conductive tracks 48, 45.

Figure 6a shows a variant of figure 6, wherein conductive tracks 45 are formed on first face 43 of gimbal 8 and suspension 5. Indeed, in figure 6a, the conductive tracks 45 and the conductive tracks 48 extend adjacent to one another, insulated with respect to the gimbal 8 and the suspension 5 by insulating material layer 46.

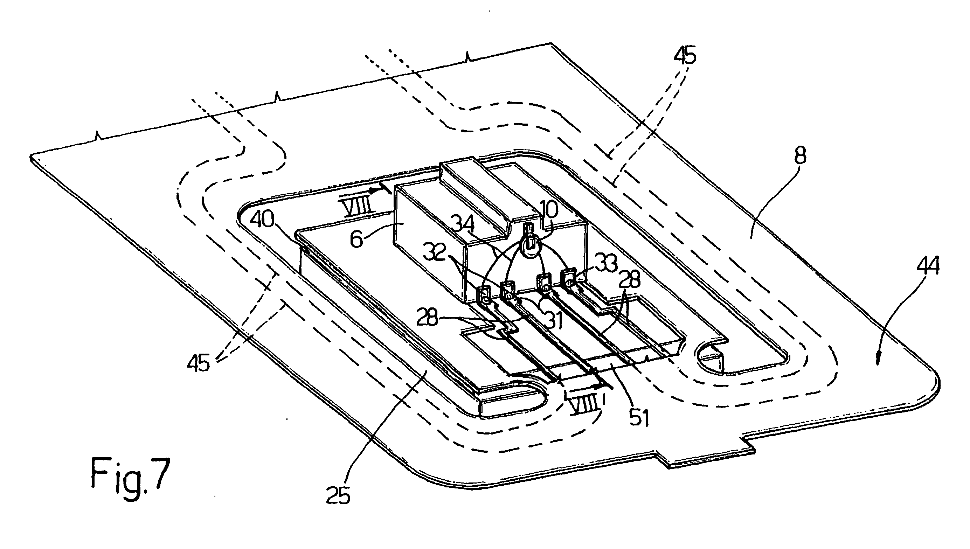

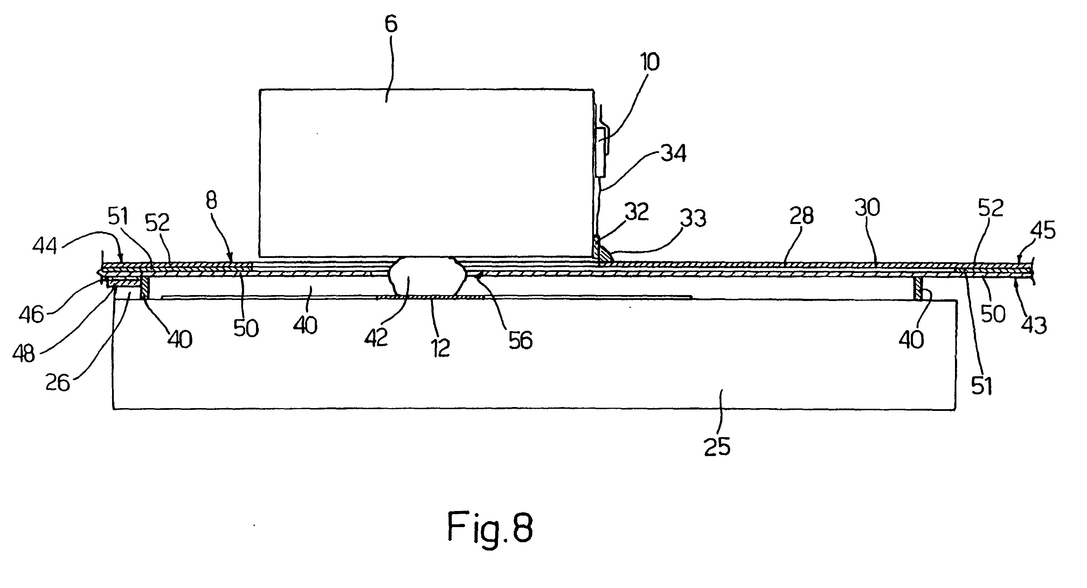

In the embodiment of figures 7 and 8, the gimbal 8 is interposed between R/W transducer 6 and die 25, before glueing them; in addition, electrical connection regions 28 and conductive tracks 45 are formed directly from the material of gimbal 8. Indeed, as shown in detail in cross-section in figure 8, the gimbal 8 is generally formed by three superimposed layers, comprising a steel plate 50, an insulating material 51 (for example polyimide), and a conductive layer 52 (for example copper). In figures 7 and 8, for forming electrical connection regions 28 and conductive tracks 45, before gimbal 8 is glued to die 25 and R/W transducer 6, the insulating material layer 51 is completely removed in the area below the R/W transducer 6 and in the adjacent area, where electrical connection regions 28 are to be formed (figure 8). In addition, conductive layer 52 is completely removed in the area below R/W transducer 6, and is removed selectively in the adjacent area and along the entire gimbal and the suspension 5, so that the remaining portions form the electrical connection regions 28 and the conductive tracks 45. In other words, the electrical connection regions 28 and the conductive tracks 45 are formed from the conductive layer 52 of the gimbal 8, and the second contact pads 30 are not present.

Here, the steel plate 50 has a hole 56 at the suspended mass 12 of rotor 11; there, insulating material 51 and conductive layer 52 are removed, as explained above. Advantageously, hole 56 has much smaller dimensions than central circular hole 41 in figure 6, since it must allow application of the mass 42 alone.

Die 25 and R/W transducer 6 are assembled to the gimbal 8 as follows, according to figures 7 and 8. Initially, after forming microactuator 9 in, or on, a semiconductor material wafer, cutting into diceas25, and forming electrical connection regions 28 and conductive tracks 45, 48 on the gimbal 8, track 40 and mass 42 are deposited; die 25 is arranged against face 43, and R/W transducer 6 is arranged against face 44 of gimbal 8; strip 40 and mass 42 are then cured by UV or by heat. In addition, first contact pads 26 are soldered to the conductive tracks 48. Subsequently, connection portions 31 are electrically connected to the third contact pads 32 by balls 33.

The advantages of the described assembly are the following. First, the gimbal 8 acts as a protective shield for the microactuator 9, both from the mechanical and electrical point of view. Indeed, the gimbal 8 covers microactuator 9 at the front, particularly in the embodiment in figures 7, 8, wherein hole 56 has very small dimensions, smaller than the area of R/W transducer 6 (see in particular figure 7, in which microactuator 9 can no longer be seen), and thus prevents dielectric particles or ions from falling or being attracted into the microactuator 9, and therefore preventing the latter from being blocked. The strip 40, laterally surrounding the microactuator 9, and of dielectric material, also contributes to shielding; consequently, in practice, the microactuator 9 is surrounded on all sides by a sealing structure which virtually insulates it from the exterior.

In addition, as already stated, the gimbal 8 acts as an electrostatic screen, by virtue of steel plate 50 (and optionally conductive layer 52, if any), electrically separating R/W transducer 6 from high-voltage biased regions (stator 17, biased to voltages close to 80 V), which could generate magnetic noising fields for R/W transducer 6.

The assembly formed by gimbal 8, die 25 and R/W transducer 6 has a more compact structure than conventional solutions with the die 25 interposed between gimbal 8 and R/W transducer 6, since, the embodiment of figures 4-6 saves a thickness equal to the gimbal 8 and to the adhesive material layer between the die 25 and gimbal 8 and the embodiment of figures 7-8 saves a thickness equal to the mass 42. In addition, the active gap, i.e. the distance between head 10 and gimbal 8, is reduced by an extent equal to the thickness of the die, of the two previously necessary glue layers and, for the first embodiment, the depth of R/W transducer 6, which extends inside the central circular hole 41. This greater compactness leads to improved aerodynamics of the assembly, to increased ease and accuracy in controlling the vertical position of the R/W transducer 6 with respect to a hard disc 7 to be read/written, and thus to a less possible impact of R/W transducer 6 against the disc, and to an increase in the durability of both.

Finally, it is apparent that many changes and variants can be made to the assembly method and to the R/W transducer-microactuator-gimbal assembly described and illustrated here, all of which come within the scope of the invention, as defined in the attached claims. For example, in the first embodiment, as an alternative to the method described, the semiconductor material wafer can be cut into individual dices before glueing R/W transducer 6 to the respective die 25, and/or mass 42 and strip 40 can be cured simultaneously. In addition, in the first embodiment, strip 40 can be formed simultaneously when depositing mass 42, instead of in different steps. In the second embodiment, according to figures 7, 8, the electrical connection regions 28 can be formed in the same manner as for the first embodiment, according to figures 4-6, 6a; as an alternative, in both embodiments, electrical connection regions 28 can comprise structures extending on the gimbal 8, and having sufficient resilience to allow rotation of R/W transducer 6 during actuation. In addition, the method of connecting R/W transducer to rotor 11 of microactuator 9 can vary; for example, instead of being glued, R/W transducer 6 can be soldered. Similarly, strip 40 can be a different material than the described adhesive material.

## Claims

1. A method for assembling an actuator device (1) for a hard disc, comprising an R/W transducer (6) connected via a microactuator (9) to a suspension plate (8), **characterised by** the step of connecting said microactuator (9) to a first face (43) of said suspension plate (8) via a body (25) accommodating said microactuator (9), such that said R/W transducer (6) projects from a second face (44) of said suspension plate, opposite to said first face through a hole (41, 56) of the suspension plate (8).

2. A method according to claim 1, **characterised in that** said hole (41) has a larger size than said R/W transducer (6), and **in that** before said step of connecting, the steps of assembling said R/W transducer (6) to said microactuator (9); and inserting said R/W transducer through said hole (41) are carried out.

3. A method according to claim 2, **characterised in that** said step of assembling comprises the step of gluing a movable structure (11) of said microactuator (9) to said R/W transducer (6).

4. A method according to claim 3, **characterised in that** said step of gluing comprises the steps of placing an mass (42) of adhesive material between said movable structure (11) of said microactuator (9) and said R/W transducer (6), and activating said adhesive mass.

5. A method according to any one of the preceding claims, **characterised in that** said step of connecting comprises the steps of placing a strip (40) of adhesive material between said body (25) and said suspension plate (8), and activating said strip (40), said strip externally surrounding said microactuator.

6. A method according to claim 4 and claim 5, **characterised in that** said adhesive material is a polymer material curable by UV or by heat.

7. A method according to any one of claims 2-6, **characterised in that** it comprises the step of:
- forming electrical connection regions (28) on said body (25);
**in that** after said step of assembling, the step is carried out of connecting said electrical connection regions (28) electrically to said R/W transducer (6);
and **in that** after said step of passing through, the step is carried out of electrically connecting said electrical connection regions (28) to conductive tracks (45) formed on said suspension plate (8).

8. A method according to claim 1, **characterised in that** said hole (56) has smaller dimensions than an area of said R/W transducer, and **in that** said step of connecting comprises the steps of placing said suspension plate (8) between said microactuator (9) and said R/W transducer (6); causing said microactuator to be integral to said R/W transducer, and causing said microactuator to be integral to said first face (43).

9. A method according to claim 8, **characterised in that** said step of causing said microactuator (9) to be integral to said R/W transducer (6) comprises the steps of placing a mass (42) of adhesive material between a movable region (11) of said microactuator (9) and said R/W transducer (6), and activating said adhesive mass (42), and **in that** said through hole (56) has larger dimensions than said adhesive mass.

10. A method according to claim 8, **characterised in that** said step of causing said microactuator (9) to be integral to said first face (43) comprises the step of placing a strip (40) of adhesive material between said body (25) and said first face (43) of said suspension plate (8), and activating said strip (40), said strip externally surrounding said microactuator (9).

11. A method according to claim 9 and/or 10, **characterised in that** said adhesive material is a polymer material curable by UV or by heart.

12. A method according to any one of claims 8-10, wherein said suspension plate (8) comprises a support layer (50), an intermediate insulating layer (51), and a conductive layer (52),
**characterised in that** before said step of connecting, the step is carried out of selectively removing said intermediate insulating layer (51) and said conductive layer (52), and forming electrical connection regions (28, 45),
and **in that** after said step of connecting, the step is carried out of:
- electrically connecting said electrical connection regions (28) to said R/W transducer (6).

13. A microactuator device (1) for a hard disc, comprising an R/W transducer (6) connected via a microactuator (9) to a suspension plate (8) having a first face (43) and a second opposite face (44) opposed to said first face, **characterised in that** said microactuator (9) is connected to said first face (43) of said suspension plate (8) via a body (25) accomodating said microactuator (9) and said R/W transducer (6) projects from said second face (44) of said suspension plate (8) throught a hole (41, 56) in said suspension plate (8).

14. A device according to claim 13, **characterised in that** said hole (41) has a larger size than said R/W transducer (6), and **in that** said R/W transducer is rigidly connected to said microactuator (9), and extends partially in said through hole (41).

15. A device according to claim 14, **characterised in that** said R/W transducer (6) is rigidly connected to a movable structure (11) of said microactuator (9) by a fixing mass (42) .

16. A device according to claim 14 or claim 15, **characterised by** suspended electrical connection regions (28) extending above said body (25), and facing said first face (43) of said suspension plate (8); said electrical connection regions (28) being electrically connected to contact pads (32) of said R/W transducer (6), said contact pads being arranged near said through hole (41) and conductive tracks (45) formed on said suspension plate (8).

17. A device according to claim 13, **characterised in that** said suspension plate (8) is arranged between said microactuator (9) and said R/W transducer (6), and **in that** said hole (56) has a smaller size than the R/W transducer and accommodates a connection structure (42) between said microactuator and said R/W transducer.

18. A device according to claim 17, **characterised in that** said connection structure comprises a fixing mass (42) arranged between a movable region (11) of said microactuator (9) and said R/W transducer (6), and **in that** said through hole (56) has larger dimensions than said fixing mass (42),

19. A device according to one of claims 16-18, **characterised in that** said suspension plate (8) comprises a support layer (50), an intermediate insulating layer (51) and a conductive layer (52), said intermediate insulating layer (51) and said conductive layer (52) being selectively removed, and forming electrical connection regions (28) which extend substantially coplanar to said second face (44) of said suspension plate (8), and **in that** said electrical connection regions (28) are electrically connected to contact pads (32) of said R/W transducer (6), said contact pads being arranged near said second face (44) of said suspension plate (8), and conductive tracks (45) formed on said suspension plate.

20. A device according to any one of claims 13-19, **characterised in that** a fixing strip (40) extends between said body (25) and said suspension plate (8), and externally surrounds said microactuator (9).

21. A device according to claims 15, 18 and 20, **characterised in that** said fixing mass (42) and said fixing strip (40) are of polymer material curable by UV or by heat.

## Patentansprüche

1. Verfahren zum Montieren einer Aktuatorvorrichtung (1) für eine Festplatte, die einen Lese-Schreib-Wandler (6) aufweist, der über einen Mikroaktuator (9) mit einer Aufhängungsplatte (8) verbunden ist,
**gekennzeichnet durch** den Schritt des Verbindens des Mikroaktuators (9) mit einer ersten Fläche (43) der Aufhängungsplatte (8) über einen Körper (25), der den Mikroaktuator (9) aufnimmt, in einer derartigen Weise, dass der Lese-Schreib-Wandler (6) von einer der ersten Fläche entgegengesetzten zweiten Fläche (44) der Aufhängungsplatte **durch** eine Öffnung (41,56) der Aufhängungsplatte (8) hervorsteht.

2. Verfahren nach Anspruch 1,
**dadurch gekennzeichnet, dass** die Öffnung (41) größer ausgebildet ist als der Lese-Schreib-Wandler (6), und dass vor dem Schritt des Verbindens die Schritte ausgeführt werden, in denen der Lese-Schreib-Wandler (6) an dem Mikroaktuator (9) montiert wird und der Lese-Schreib-Wandler durch die Öffnung (41) eingesetzt wird.

3. Verfahren nach Anspruch 2,
**dadurch gekennzeichnet, dass** der Schritt des Montierens den Schritt des Festklebens einer beweglichen Konstruktion (11) des Mikroaktuators (9) an dem Lese-Schreib-Wandler (6) umfasst.

4. Verfahren nach Anspruch 3,
**dadurch gekennzeichnet, dass** der Schritt des Festklebens die Schritte umfasst, in denen eine Masse (42) aus Klebstoffmaterial zwischen der beweglichen Konstruktion (11) des Mikroakuators (9) und dem Lese-Schreib-Wandler (6) platziert wird und die Klebstoffmasse aktiviert wird.

5. Verfahren nach einem der vorausgehenden Ansprüche,
**dadurch gekennzeichnet, dass** der Schritt des Verbindens die Schritte umfasst, in denen ein Streifen (40) aus Klebstoffmaterial zwischen dem Körper (25) und der Aufhängungsplatte (8) platziert wird und der Streifen (40) aktiviert wird, wobei der Streifen den Mikroaktuator außen umgibt.

6. Verfahren nach Anspruch 4 oder 5,
**dadurch gekennzeichnet, dass** es sich bei dem Klebstoffmaterial um ein Polymermaterial handelt, das durch UV-Licht oder durch Wärme aushärtbar ist.

7. Verfahren nach einem der Ansprüche 2 bis 6,
**dadurch gekennzeichnet, dass** es folgenden Schritt aufweist:
Bilden von elektrischen Verbindungsbereichen (28) auf dem Körper (25); dass nach dem Schritt des Montierens der Schritt ausgeführt wird, in dem die elektrischen Verbindungsbereiche (28) mit dem Lese-Schreib-Wandler (6) elektrisch verbunden werden;
und dass nach dem Schritt des Hindurchführens der Schritt ausgeführt wird, in dem die elektrischen Verbindungsbereiche (28) mit auf der Aufhängungsplatte (8) ausgebildeten Leiterbahnen (45) elektrisch verbunden werden.

8. Verfahren nach Anspruch 1,
**dadurch gekennzeichnet, dass** die Öffnung (56) kleinere Abmessungen aufweist als eine Fläche des Lese-Schreib-Wandlers, und dass der Schritt des Verbindens die Schritte umfasst, in denen die Aufhängungsplatte (8) zwischen dem Mikroaktuator (9) und dem Lese-Schreib-Wandler (6) platziert wird, der Mikroakuator in integraler Weise mit dem Lese-Schreib-Wandler vereinigt wird und der Mikroaktuator in integraler Weise mit der ersten Fläche (43) ausgebildet wird.

9. Verfahren nach Anspruch 8,
**dadurch gekennzeichnet, dass** der Schritt, in dem der Mikroaktuator (9) in integraler Weise mit dem Lese-Schreib-Wandler (6) ausgebildet wird, die Schritte umfasst, in denen eine Masse (42) aus Klebstoffmaterial zwischen einem beweglichen Bereich (11) des Mikroaktuators (9) und dem Lese-Schreib-Wandler (6) platziert wird und die Klebstoffmasse (42) aktiviert wird, und dass die Durchgangsöffnung (56) größere Abmessungen aufweist als die Klebstoffmasse.

10. Verfahren nach Anspruch 8,
**dadurch gekennzeichnet, dass** der Schritt, in dem der Mikroaktuator (9) in integraler Weise mit der ersten Fläche (43) vereinigt wird, den Schritt umfasst, in dem ein Streifen (40) aus Klebstoffmaterial zwischen dem Körper (25) und der ersten Fläche (43) der Aufhängungsplatte (8) platziert wird und der Streifen (40) aktiviert wird, wobei der Streifen den Mikroaktuator (9) außen umgibt.

11. Verfahren nach Anspruch 9 und/ oder Anspruch 10,
**dadurch gekennzeichnet, dass** es sich bei dem Klebstoffmaterial um ein Polymermaterial handelt, das durch UV-Licht oder durch Wärme aushärtbar ist.

12. Verfahren nach einem der Ansprüche 8 bis 10,
wobei die Aufhängungsplatte (8) eine Trägerschicht (50), eine zwischengeordnete Isolierschicht (51) und eine leitfähige Schicht (52) aufweist,
**dadurch gekennzeichnet, dass** vor dem Schritt des Verbindens der Schritt ausgeführt wird, in dem die zwischengeordnete Isolierschicht (51) und die leitfähige Schicht (52) selektiv entfernt werden und elektrische Verbindungsbereiche (28, 45) gebildet werden,
und dass nach dem Schritt des Verbindens der Schritt ausgeführt wird, in dem die elektrischen Verbindungsbereiche (28) mit dem Lese-Schreib-Wandler (6) elektrisch verbunden werden.

13. Mikroaktuatorvorrichtung (1) für eine Festplatte, mit einem Lese-Schreib-Wandler (6), der über einen Mikroaktuator (9) mit einer Aufhängungsplatte (8) verbunden ist, die eine erste Fläche (43) und eine der ersten Fläche entgegengesetzte zweite Fläche (44) aufweist,
**dadurch gekennzeichnet, dass** der Mikroaktuator (9) mit der ersten Fläche (43) der Aufhängungsplatte (8) über einen Körper (25) verbunden ist, in dem der Mikroaktuator (9) untergebracht ist, und dass der Lese-Schreib-Wandler (6) von der zweiten Fläche (44) der Aufhängungsplatte (8) durch eine Öffnung (41, 56) in der Aufhängungsplatte (8) vorsteht.

14. Vorrichtung nach Anspruch 13,
**dadurch gekennzeichnet, dass** die Öffnung (41) größer ausgebildet ist als der Lese-Schreib-Wandler (6), und dass der Lese-Schreib-Wandler starr mit dem Mikroaktuator (9) verbunden ist und sich teilweise in der Öffnung (41) erstreckt.

15. Vorrichtung nach Anspruch 14,
**dadurch gekennzeichnet, dass** der Lese-Schreib-Wandler (6) mit einer beweglichen Konstruktion (11) des Mikroaktuators (9) durch eine Fixiermasse (42) starr verbunden ist.

16. Vorrichtung nach Anspruch 14 oder Anspruch 15,
**gekennzeichnet durch** schwebende elektrische Verbindungsbereiche (28), die sich über dem Körper (25) erstrecken und der ersten Fläche (43) der Aufhängungsplatte (8) zugewandt sind, wobei die elektrischen Verbindungsbereiche (28) mit Kontaktflächen (32) des Lese-Schreib-Wandlers (6), die in der Nähe der Duchgangsöffnung (41) angeordnet sind, und mit auf der Suspensionsplatte (8) ausgebildeten Leiterbahnen (45) elektrisch verbunden sind.

17. Vorrichtung nach Anspruch 13,
**dadurch gekennzeichnet, dass** die Aufhängungsplatte (8) zwischen dem Mikroaktuator (9) und dem Lese-Schreib-Wandler (6) angeordnet ist und dass die Öffnung (56) eine geringere Größe aufweist als der Lese-Schreib-Wandler und eine Verbindungskonstruktion (42) zwischen dem Mikroaktuator und dem Lese-Schreib-Wandler aufnimmt.

18. Vorrichtung nach Anspruch 17,
**dadurch gekennzeichnet, dass** die Verbindungskonstruktion eine Fixiermasse (42) aufweist, die zwischen einem beweglichen Bereich (11) des Mikroaktuators (9) und dem Lese-Schreib-Wandler (6) angeordnet ist, und dass die Durchgangsöffnung (56) größere Abmessungen aufweist als die Fixiermasse (42).

19. Vorrichtung nach einem der Ansprüche 16 bis 18,
**dadurch gekennzeichnet, dass** die Aufhängungsplatte (8) eine Trägerschicht (50), eine zwischengeordnete Isolierschicht (51) und eine leitfähige Schicht (52) aufweist, wobei die zwischengeordnete Isolierschicht (51) und die leitfähige Schicht (52) selektiv entfernt sind und elektrische Verbindungsbereiche (28) ausgebildet sind, die im Wesentlichen koplanar zu der zweiten Fläche (44) der Aufhängungsplatte (8) ausgebildet sind, und dass die elektrischen Verbindungsbereiche (28) mit Kontaktflächen (32) des Lese-Schreib-Wandlers (6), die in der Nähe der zweiten Fläche (44) der Aufhängungsplatte (8) angeordnet sind, sowie mit auf der Aufhängungsplatte ausgebildeten Leiterbahnen (45) elektrisch verbunden sind.

20. Vorrichtung nach einem der Ansprüche 13 bis 19,
**dadurch gekennzeichnet, dass** sich ein Fixierstreifen (40) zwischen dem Körper (25) und der Aufhängungsplatte (8) erstreckt und den Mikroaktuator (9) außen umgibt.

21. Vorrichtung nach einem der Ansprüche 15, 18 und 20,
**dadurch gekennzeichnet, dass** die Fixiermasse (42) und der Fixierstreifen (40) aus Polymermaterial bestehen, das durch UV-Licht oder Wärme aushärtbar ist.

## Revendications

1. Procédé d'assemblage d'un dispositif d'actionneur (1) pour un disque dur, comprenant un transducteur de lecture et d'enregistrement (6) relié via un micro-actionneur (9) à une plaque de suspension (8), **caractérisé par** l'étape consistant à relier ledit micro-actionneur (9) à une première face (43) de ladite plaque de suspension (8) via un corps (25) contenant ledit micro-actionneur (9), de telle sorte que ledit transducteur de lecture et d'enregistrement (6) se projette à partir d'une seconde face (44) de ladite plaque de suspension, opposée à ladite première face, à l'aide d'un trou (41, 56) de la plaque de suspension (8).

2. Procédé selon la revendication 1, **caractérisé en ce que** ledit trou (41) possède une taille supérieure audit transducteur de lecture et d'enregistrement (6), et **en ce que**, avant ladite étape de liaison, les étapes d'assemblage dudit transducteur de lecture et d'enregistrement (6) sur ledit micro-actionneur (9) et d'insertion dudit transducteur de lecture et d'enregistrement dans ledit trou (41) sont effectuées.

3. Procédé selon la revendication 2, **caractérisé en ce que** ladite étape d'assemblage comprend l'étape consistant à coller une structure mobile (11) dudit micro-actionneur (9) sur ledit transducteur de lecture et d'enregistrement (6).

4. Procédé selon la revendication 3, **caractérisé en ce que** ladite étape de collage comprend les étapes consistant à placer une masse (42) de matériau adhésif entre ladite structure mobile (11) dudit micro-actionneur (9) et ledit transducteur de lecture et d'enregistrement (6), et à activer ladite masse adhésive.

5. Procédé selon l'une quelconque des revendications précédentes, **caractérisé en ce que** ladite étape de liaison comprend les étapes consistant à placer une bande (40) de matériau adhésif entre ledit corps (25) et ladite plaque de suspension (8), et à activer ladite bande (40), ladite bande entourant ledit micro-actionneur à l'extérieur.

6. Procédé selon la revendication 4 ou la revendication 5, **caractérisé en ce que** ledit matériau adhésif est un matériau polymère durcissable par ultraviolets ou par la chaleur.

7. Procédé selon l'une quelconque des revendications 2 à 6, **caractérisé en ce qu'**il comprend l'étape consistant à :
- former des zones de liaison électrique (28) sur ledit corps (25) ;
**en ce que**, après ladite étape d'assemblage, l'étape consistant à relier électriquement lesdites zones de liaison électrique (28) audit transducteur de lecture et d'enregistrement (6) est effectuée ;
et **en ce que**, après ladite étape de liaison, l'étape consistant à relier électriquement lesdites zones de liaison électrique (28) à des pistes conductrices (45) formées sur ladite plaque de suspension (8) est effectuée.

8. Procédé selon la revendication 1, **caractérisé en ce que** ledit trou (56) possède des dimensions inférieures à une zone dudit transducteur de lecture et d'enregistrement, et **en ce que** ladite étape de liaison comprend les étapes consistant à placer ladite plaque de suspension (8) entre ledit micro-actionneur (9) et ledit transducteur de lecture et d'enregistrement (6) ; provoquer le fait que ledit micro-actionneur fasse partie intégrante dudit transducteur de lecture et d'enregistrement, et provoquer le fait que ledit micro-actionneur fasse partie intégrante de ladite première face (43).

9. Procédé selon la revendication 8, **caractérisé en ce que** ladite étape provoquant le fait que ledit micro-actionneur (9) fasse partie intégrante dudit transducteur de lecture et d'enregistrement (6) comprend les étapes consistant à placer une masse (42) de matériau adhésif entre une zone mobile (11) dudit micro-actionneur (9) et ledit transducteur de lecture et d'enregistrement (6), et à activer ladite masse adhésive (42), et **en ce que** ledit trou traversant (56) possède des dimensions supérieures à ladite masse adhésive.

10. Procédé selon la revendication 8, **caractérisé en ce que** ladite étape provoquant le fait que ledit micro-actionneur (9) fasse partie intégrante de ladite première face (43) comprend l'étape consistant à placer une bande (40) de matériau adhésif entre ledit corps (25) et ladite première face (43) de ladite plaque de suspension (8), et à activer ladite bande (40), ladite bande entourant ledit micro-actionneur (9) à l'extérieur.

11. Procédé selon la revendication 9 et/ou 10, **caractérisé en ce que** ledit matériau adhésif est un matériau polymère durcissable par ultraviolets ou par la chaleur.

12. Procédé selon l'une quelconque des revendications 8 à 10, dans lequel ladite plaque de suspension (8) comprend une couche de support (50), une couche isolante intermédiaire (51), et une couche conductrice (52),
**caractérisé en ce que**, avant ladite étape de liaison, l'étape consistant à retirer sélectivement ladite couche isolante intermédiaire (51) et ladite couche conductrice (52) et à former des zones de liaison électrique (28, 45) est effectuée,
et **en ce que**, après ladite étape de liaison, l'étape consistant à :
- relier électriquement lesdites zones de liaison électrique (28) audit transducteur de lecture et d'enregistrement (6) est effectuée.

13. Dispositif de micro-actionneur (1) pour un disque dur, comprenant un transducteur de lecture et d'enregistrement (6) relié via un micro-actionneur (9) à une plaque de suspension (8) possédant une première face (43) et une seconde face opposée (44) à ladite première face, **caractérisé en ce que** ledit micro-actionneur (9) est relié à ladite première face (43) de ladite plaque de suspension (8) via un corps (25) contenant ledit micro-actionneur (9), et ledit transducteur de lecture et d'enregistrement (6) se projette à partir de ladite seconde face (44) de ladite plaque de suspension (8) dans un trou (41, 56) de ladite plaque de suspension (8).

14. Dispositif selon la revendication 13, **caractérisé en ce que** ledit trou (41) possède une taille supérieure audit transducteur de lecture et d'enregistrement (6), et **en ce que** ledit transducteur de lecture et d'enregistrement est relié de manière rigide audit micro-actionneur (9), et s'étend partiellement dans ledit trou (41).

15. Dispositif selon la revendication 14, **caractérisé en ce que** ledit transducteur de lecture et d'enregistrement (6) est relié de manière rigide à une structure mobile (11) dudit micro-actionneur (9) par une masse de fixation (42).

16. Dispositif selon la revendication 14 ou la revendication 15, **caractérisé par** des zones de liaison électriques suspendues (28) s'étendant au-dessus dudit corps (25), et faisant face à ladite première face (43) de ladite plaque de suspension (8) ; lesdites zones de liaison électrique (28) étant électriquement reliées à des plages de contact (32) dudit transducteur de lecture et d'enregistrement (6), lesdites plages de contact étant agencées près dudit trou traversant (41) et des pistes conductrices (45) formées sur ladite plaque de suspension (8).

17. Dispositif selon la revendication 13, **caractérisé en ce que** ladite plaque de suspension (8) est agencée entre ledit micro-actionneur (9) et ledit transducteur de lecture et d'enregistrement (6), et **en ce que** ledit trou (56) possède une taille inférieure au transducteur de lecture et d'enregistrement et contient une structure de liaison (42) entre ledit micro-actionneur et ledit transducteur de lecture et d'enregistrement.

18. Dispositif selon la revendication 17, **caractérisé en ce que** ladite structure de liaison comprend une masse de fixation (42) agencée entre une zone mobile (11) dudit micro-actionneur (9) et ledit transducteur de lecture et d'enregistrement (6), et **en ce que** ledit trou traversant (56) possède des dimensions supérieures à ladite masse de fixation (42).

19. Dispositif selon l'une des revendications 16 à 18, **caractérisé en ce que** ladite plaque de suspension (8) comprend une couche de support (50), une couche isolante intermédiaire (51) et une couche conductrice (52), ladite couche isolante intermédiaire (51) et ladite couche conductrice (52) étant sélectivement retirées, et formant des zones de liaison électrique (28) qui s'étendent sensiblement de manière coplanaire par rapport à ladite seconde face (44) de ladite plaque de suspension (8), et **en ce que** lesdites zones de liaison électrique (28) sont électriquement reliées à des plages de contact (32) dudit transducteur de lecture et d'enregistrement (6), lesdites plages de contact étant agencées près de ladite seconde face (44) de ladite plaque de suspension (8), et des pistes conductrices (45) formées sur ladite plaque de suspension.

20. Dispositif selon l'une quelconque des revendications 13 à 19, **caractérisé en ce qu'**une bande de fixation (40) s'étend entre ledit corps (25) et ladite plaque de suspension (8), et entoure ledit micro-actionneur (9) à l'extérieur.

21. Dispositif selon les revendications 15, 18 et 20, **caractérisé en ce que** ladite masse de fixation (42) et ladite bande de fixation (40) sont en matériau polymère durcissable par ultraviolets ou par la chaleur.
